Europäisches Patentamt

European Patent Office

Office européen des brevets

(11) Publication number: **0 435 372 B1**

# EUROPEAN PATENT SPECIFICATION

(45) Date of publication of patent specification: **09.11.94**   (51) Int. Cl.5: **F16H 61/06**

(21) Application number: **90203323.2**

(22) Date of filing: **13.12.90**

(54) **Method of controlling gear change in an automatic transmission.**

(30) Priority: **11.01.90 US 464054**
    **26.12.89 US 456885**

(43) Date of publication of application:
    **03.07.91 Bulletin  91/27**

(45) Publication of the grant of the patent:
    **09.11.94 Bulletin  94/45**

(84) Designated Contracting States:
    **DE FR GB**

(56) References cited:
    **EP-A- 0 231 994**
    **EP-A- 0 322 111**
    **EP-A- 0 327 004**

(73) Proprietor: **GENERAL MOTORS CORPORA-
TION**
**General Motors Building
3044 West Grand Boulevard
Detroit Michigan 48202 (US)**

(72) Inventor: **Lentz, Carl Albert**
**1826 Greencastle Road
Mooresville, IN 46158 (US)**
Inventor: **Hibner, John Anthony**
**206 E. College Street
Coldwater, OH 45828 (US)**

(74) Representative: **Denton, Michael John et al**
**Patent Section
1st Floor
Gideon House
28 Chapel Street
Luton Bedfordshire LU1 2SE (GB)**

Rank Xerox (UK) Business Services
(3.10/3.09/3.3.3)

## Description

This invention relates to a method of controlling the change in an automatic transmission from a lower to a higher speed ratio, and in particular during closed throttle conditions.

Generally, a motor vehicle automatic transmission includes a number of gear elements coupling its input and output shafts, and a related number of torque establishing devices such as clutches and brakes which are selectively engageable to activate certain gear elements for establishing a desired speed ratio between the input and output shafts. The brake can be of the band-type or disc-type. Automotive engineers commonly refer to disc-type brakes in transmissions as "clutches" or "reaction clutches". As used herein, the terms "clutches" and "torque transmitting devices" will be used to refer to brakes as well as clutches.

The input shaft is connected to the vehicle engine through a fluid coupling, such as a torque converter, and the output shaft is connected directly to the vehicle wheels. Shifting from one forward speed ratio to another is performed in response to engine throttle and vehicle speed, and generally involves releasing or disengaging the clutch (off-going) associated with the current speed ratio and applying or engaging the clutch (on-coming) associated with the desired speed ratio.

The speed ratio is defined as the transmission input speed or turbine speed divided by the output speed. Thus, a low gear range has a high speed ratio and a higher gear range has a lower speed ratio. To perform a downshift, a shift is made from a low speed ratio to a high speed ratio. In the type of transmission described below, the downshift is accomplished by disengaging a clutch associated with the lower speed ratio and engaging a clutch associated with the higher speed ratio thereby to reconfigure the gear set to operate at the higher speed ratio. Shifts performed in the above manner are termed clutch-to-clutch shifts and require precise timing in order to achieve high quality shifting.

EP-A-322,111 discloses a method of carrying out a sequenced clutch-to-clutch downshift including the features in the preamble of claim 1.

EP-A-327,004 discloses a method in which, as shift pressure control in the second period after detection of a turbine speed pullup, a closed-loop control of the on-coming torque transmitting device is carried out by establishing a turbine speed profile representative of desired shift sequence and controlling the pressure of the on-coming torque transmitting device to control the slip of the on-coming torque transmitting device on the basis of the turbine speed profile.

An aspect of the present invention provides a method of controlling the change in an automatic transmission from a lower speed ratio to a higher speed ratio as defined in Claim 1.

The invention can provide a method of controlling a closed throttle downshift in an automatic transmission by disengaging one clutch and engaging another clutch in a controlled manner, and using transmission speed feedback to manage the control. In an embodiment, a motor vehicle automatic transmission with an electronic control system achieves high quality closed throttle downshifts by monitoring input and output speeds to coordinate on-coming clutch application and off-going clutch release. During the closed throttle downshift, the on-coming clutch slip speed is reduced to zero rpm while following a predefined profile by use of closed-loop control of the on-coming clutch pressure command. The system may also monitor throttle position and, when the throttle is opened during a closed throttle shift, perform a transition from closed throttle downshift control to powered downshift control if the off-going clutch still has pressure, or perform a transition from closed-loop to open-loop control of the on-coming clutch if the off-going clutch has been exhausted.

The present invention is also directed to apparatus comprising means for carrying out the steps of the described method.

An embodiment of the present invention is described below, by way of illustration only, with reference to the accompanying drawings, in which:

Figure 1a is a system diagram of a fluid operated motor vehicle transmission, including several solenoid operated fluid pressure control valves and a control unit;

Figure 1b is a table illustrating the clutch engagements required to establish the various speed ratios of the transmission of Figure 1a;

Figures 2, 3a and 3b are flow diagrams of an embodiment of method of controlling gear change by means of the controller of Figure 1a;

Figure 4, graphs A and B, illustrate on-coming pressure command and off-going pressure command, respectively, for clutch to clutch shifting;

Figure 5, graphs A and B, are a slip diagram and a turbine speed diagram of the on-coming clutch for the closed-loop operation thereof;

Figures 6 to 9 are flow diagrams illustrating an embodiment of closed throttle downshift logic for the on-coming clutch;

Figures 10 and 11 are flow diagrams illustrating an embodiment of closed throttle downshift logic for the off-going clutch;

Figures 12, 14 and 15 are flow diagrams illustrating an embodiment of transition logic for throttle increase during closed throttle downshift;

Figure 13, graphs A and B, are on-coming and off-going pressure command curves for powered downshift clutch control; and

Figure 16 is an on-coming pressure command diagram for an embodiment of control after detection of throttle increase during closed throttle downshift.

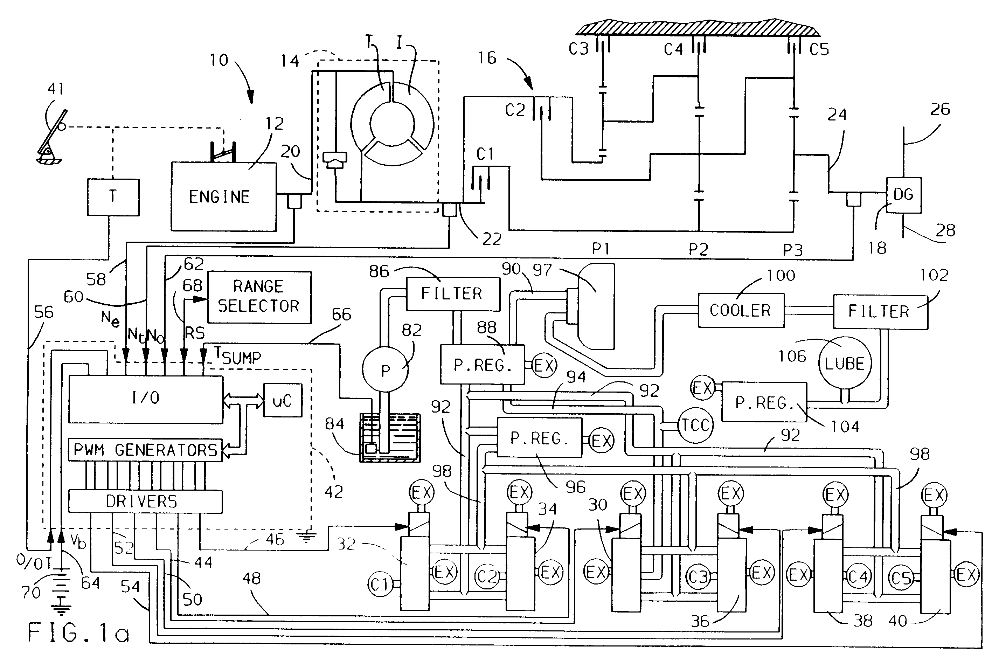

Referring now to Figure 1a, the reference numeral 10 generally designates a motor vehicle drive train which includes a throttled internal combustion engine 12, a fluidic torque converter 14, a six-speed fluid operated power transmission 16 and a differential gear set (DG) 18. The engine 12 is connected to the torque converter 14 via shaft 20, the torque converter 14 is connected to the transmission 16 via shaft 22, the transmission 16 is connected to the differential gear set 18 via shaft 24 and the differential gearset is connected to a pair of drive wheels (not shown) via the prop shafts 26 and 28.

Gear shifts are accomplished by selectively engaging and disengaging brakes and clutches, herein called torque transmitting devices or clutches. These clutches are actuated by hydraulic pressure and upon engagement require a fill time before torque is transmitted between a driving and a driven friction element.

The speed and torque relationships between the engine 12 and the drive wheels of the vehicle are controlled by a fluid operated torque converter clutch, designated TCC, and five fluid operated transmission clutches, designated C1 - C5. The torque converter clutch TCC is selectively engaged by the solenoid operated control valve 30 to connect mechanically the impeller I and turbine T of torque converter 14. The clutches TCC, C1, C2, C3, C4, C5 are selectively engaged and disengaged by the solenoid operated control valves 30, 32, 34, 36, 38, 40 according to the diagram shown in Figure 1b, selectively to establish a desired transmission speed ratio. The illustrated transmission gear set provides one reverse ratio and six forward ratios, and is described in detail in the U.S. Patent 4,070,927. An operator actuated accelerator pedal 41 positions the engine throttle for controlling the engine power output.

The operation of the solenoid operated control valves 30 - 40 is controlled by a computer-based control unit 42, shown in dotted outline, via lines 44 - 54 in response to various input signals representative of system parameters. Such inputs include an engine throttle position signal %T on line 56, an engine output shaft speed signal Ne on line 58, a torque converter output shaft speed signal Nt on line 60, a transmission output shaft speed signal No on line 62, a system supply voltage signal Vb on line 64, a transmission fluid temperature signal Tsump on line 66 and an operator range selector position signal RS on line 68. The system voltage is supplied by the storage battery 70, and the input signals are obtained with conventional electrical transducers such as potentiometers, thermistors and magnetic speed pickups.

Internally, the control unit 42 comprises a number of conventional devices including a microcomputer (uC) with internal clock and memory, an input/output device (I/O) and an array of pulse width modulated signal generators (PWM) and drivers (DR). As indicated below, a PWM generator and a driver (DR) are dedicated to each solenoid operated control valve 30 - 40. The PWM generator outputs are delivered to the respective drivers (DR) and are used to energize the respective solenoid operated control valves. The duty cycle of the PWM generator outputs determine the hydraulic pressure supplied by the solenoid operated control valves, with a low percent duty cycle yielding a low pressure and a high percent duty cycle yielding a high pressure for a normally closed valve.

The hydraulic circuit of transmission 16 includes a positive displacement pump 82 for supplying pressurized hydraulic fluid from the sump or reservoir 84, to the clutches TCC and C1 - C5 through various hydraulic and electro-hydraulic valving mechanisms. After passing through a main circuit filter 86, the fluid output of pump 82 is directed to a main pressure regulator valve 88 which develops regulated fluid pressures in lines 90 and 92.

The fluid in line 90, generally referred to as converter feed pressure, is directed through the torque converter 14, as schematically designated by the converter shell 97. After passing through a cooler 100 and cooler filter 102, the converter fluid is then regulated down to a lower pressure by the regulator valve 104 and directed to the transmission lube, or lubricant circuit 106.

The fluid in line 92, generally referred to as main or line pressure, is supplied as an input to the solenoid operated control valves 30 - 40, and also to the control pressure regulator valve 96. The control pressure regulator valve 96 develops a somewhat lower pressure in line 98, referred to herein as the control pressure, such pressure being directed to the solenoid of each control valve 30 - 40.

The fluid in line 94, referred to as the converter clutch pressure, is supplied directly by solenoid 30 to the torque converter clutch TCC to engage the same. This pressure is also supplied to the main pressure regulator valve 88 to provide a lower regulated line pressure in the converter lock-up mode.

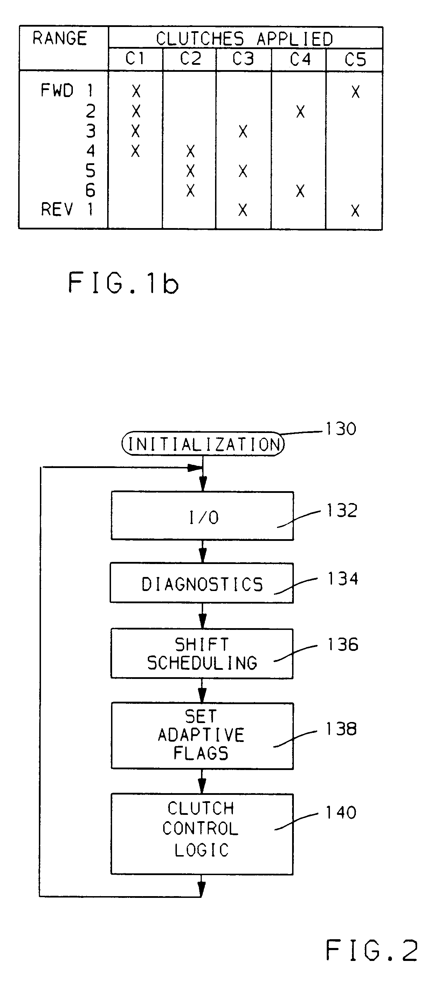

Figures 2, 3, 6 - 12, 14 and 15 are flow diagrams representative of computer program instructions executed by the computer-based control unit 42 of Figure 1 in carrying out the shift control technique described below.

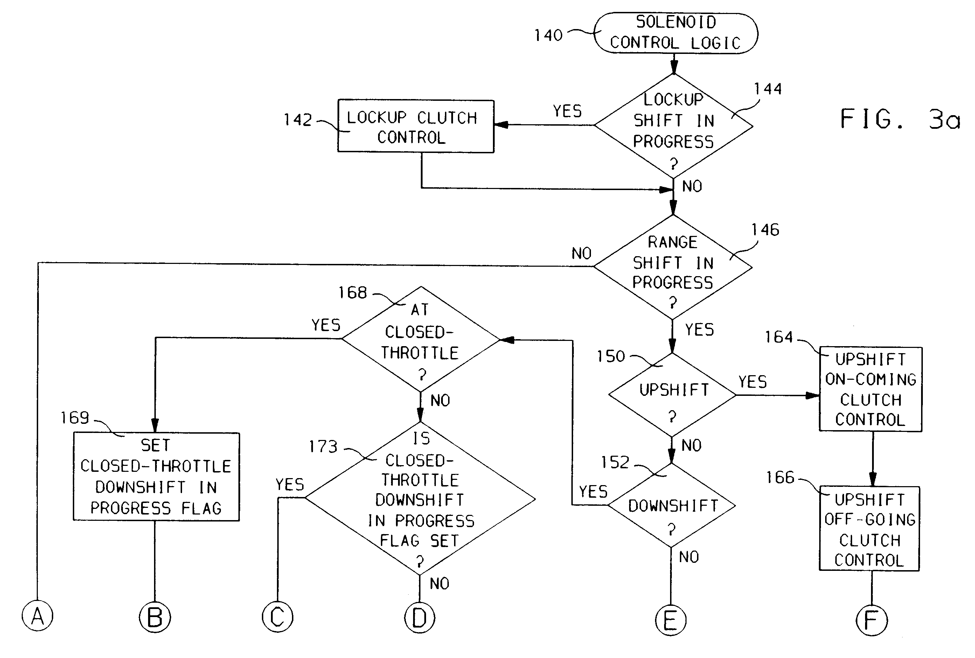

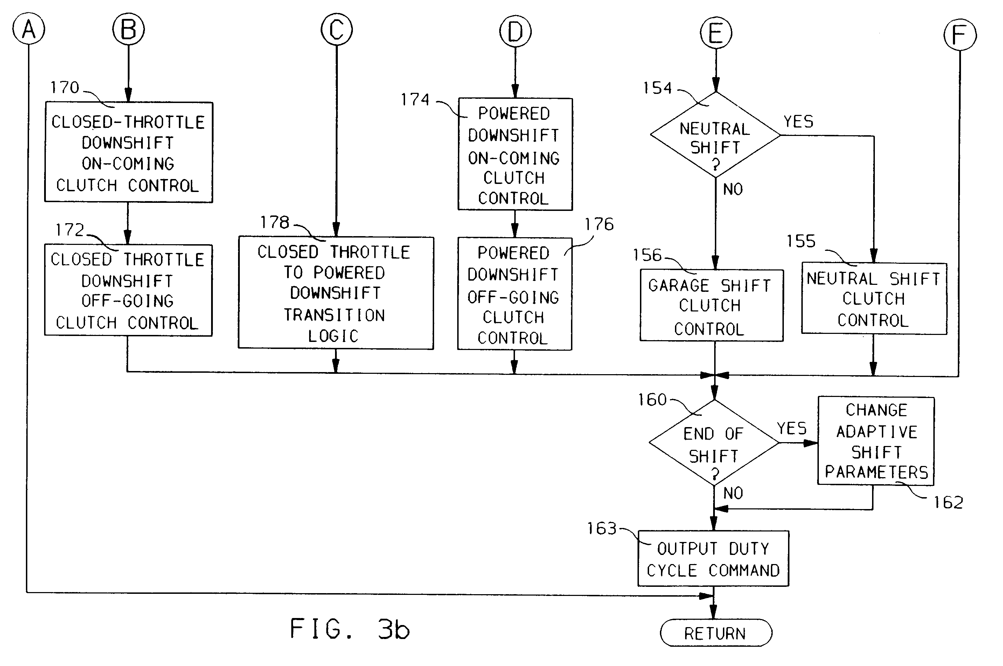

Figure 2 represents an executive or main loop program which directs the sequential execution of various subroutines. Block 130 designates a series of instructions executed at the initiation of each period of vehicle operation for setting the various timers, registers and variable values of control unit 42 to predetermined initial values. Thereafter, the blocks 132 - 140 are sequentially and repeatedly executed as indicated by the flow diagram lines. Block 132 reads the various input signal values and outputs the required control signals to the PWM generators and drivers for solenoid controlled valves 30 - 40. Blocks 134 - 138 contain diagnostic, shift scheduling, and adaptive flag logic. The clutch control logic block 140 analyzes the various system input signals described above in reference to Figure 1a, develops pressure command signals PCMD for application to the solenoid operated control valves at the next execution of block 132, and computes adaptive corrections based on the adaptive flags at shift completion. Block 140 also effects pulse-width-modulation of the solenoid drive voltage to carry out the pressure commands for specific shift operations. Block 140 is detailed in the flow chart of Figures 3a - 3b.

The flow diagram of Figures 3a - 3b sets forth the program for making decisions as to the type of range shift in progress, if any, and determines the specific control for the on-coming and the off-going clutches. The program also checks whether a shift has performed within specifications, and if not, certain shift parameters are changed at shift completion according to predefined adaptive logic to correct the shift. First, lockup clutch control is executed 142 if a lockup shift is in progress 144. Then it is determined (from the shift schedule) whether a range shift is in progress 146. If not, the clutch control logic is exited. If a range shift is in progress 146, it is determined whether it is an upshift 150, a downshift 152, a neutral shift 154, or a garage shift 156. A garage shift is a shift from neutral to either drive or reverse, or a shift from drive to reverse or from reverse to drive. The control flows from either the upshift, downshift, neutral shift or the garage shift block to the end-of-shift test 160. Once the shift is completed 160, adaptive shift parameters are changed if required 162 and the duty cycle command is output 163. If the shift has not ended 160, the duty cycle command is output 163 before returning to the main loop of Figure 2.

If an upshift is indicated 150, the upshift on-coming clutch control 164 and the upshift off-going clutch control 166 are activated. If a downshift is indicated 152, it is next decided whether it is a closed throttle downshift or a powered downshift 168. If it is closed throttle, a closed throttle in progress flag is set 169, the closed throttle on-coming clutch control is activated 170 and the closed throttle off-going clutch control is activated 172. If the downshift is not at closed throttle 168, the closed throttle flag is checked 173. If the flag is not set, the powered downshift on-coming clutch control 174 and the powered downshift off-going clutch control 176 are activated. If the closed throttle flag is set 173, the throttle opened during the course of the closed throttle downshift and a transition to powered downshift may be necessary; in such case, the appropriate transition logic is invoked 178. If the shift is a neutral shift 154, the neutral shift clutch control executes shifts from drive to neutral or from reverse to neutral 155.

Each control phase operates by setting pressures, pressure increments, times or other values to predefined calibrated values which are herein generally called "set", "preset", "given" or "certain" values. Each such value is chosen from a table of calibrated values for each specific transmission condition, throttle range and shift type. Thus, different values are supplied for upshift, downshift, etc. as well as each range shift, e.g., 1-2, 2-1, 4-3, 5-4, etc. Converter and lockup modes may also require separate sets of calibration values. In the following description, the term "above sync" means the turbine speed is higher than that required for on-coming clutch synchronization.

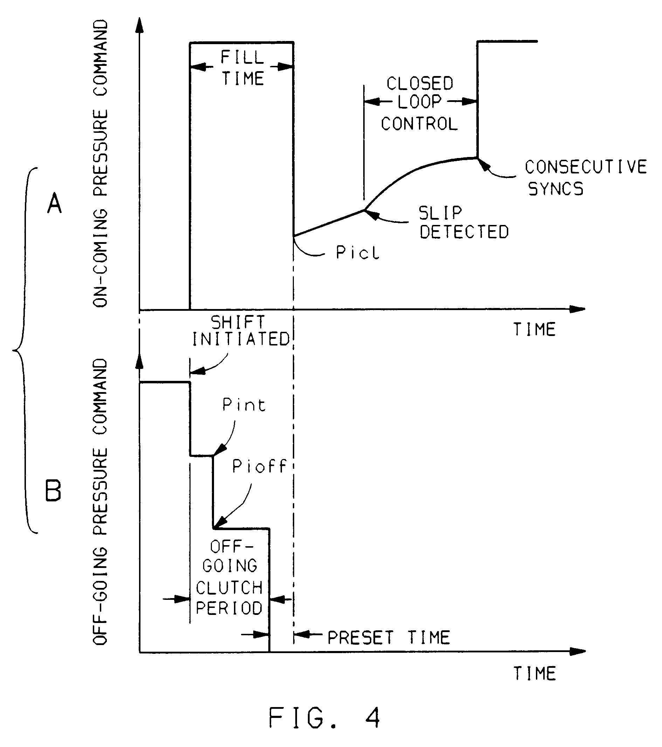

Figure 4, graphs A and B, show respectively the on-coming and off-going pressure commands for control of the on-coming and off-going clutches during a closed throttle downshift. At shift initiation, the on-coming pressure command is set to maximum for a fill time to prepare the on-coming clutch to accept torque. During the fill time, the off-going clutch pressure command is stepped to an intermediate value Pint for a set time, and is then stepped to a lower value Pioff until a preset time before the end of the fill time. Thus, the fill time less the preset time determines the off-going clutch period. Then the off-going clutch is exhausted so that the on-coming clutch can take over when it is ready. The on-coming clutch pressure command is set to an initial closed-loop pressure Picl and then ramped up until slip of the off-going clutch (or turbine pullup) is detected. Turbine pullup is a result of the beginning of off-going clutch slip. Pullup is detected when the turbine speed Nt becomes greater than the product of the output speed No and the old or lower speed ratio SR(old) plus a constant K1, or

$$Nt > No * SR(old) + K1.$$

The off-going clutch slip triggers closed-loop control of the on-coming clutch pressure. The on-coming clutch slip is monitored and controlled to a calculated slip profile. This closed-loop slip profile control continues until on-coming clutch synchronization has been detected for several consecutive times. Synchronization is detected when the turbine speed Nt is within a threshold value, K2, of the output speed times the new or high speed ratio, or

ABS |[Nt - No * SR(new)]| ≦ K2.

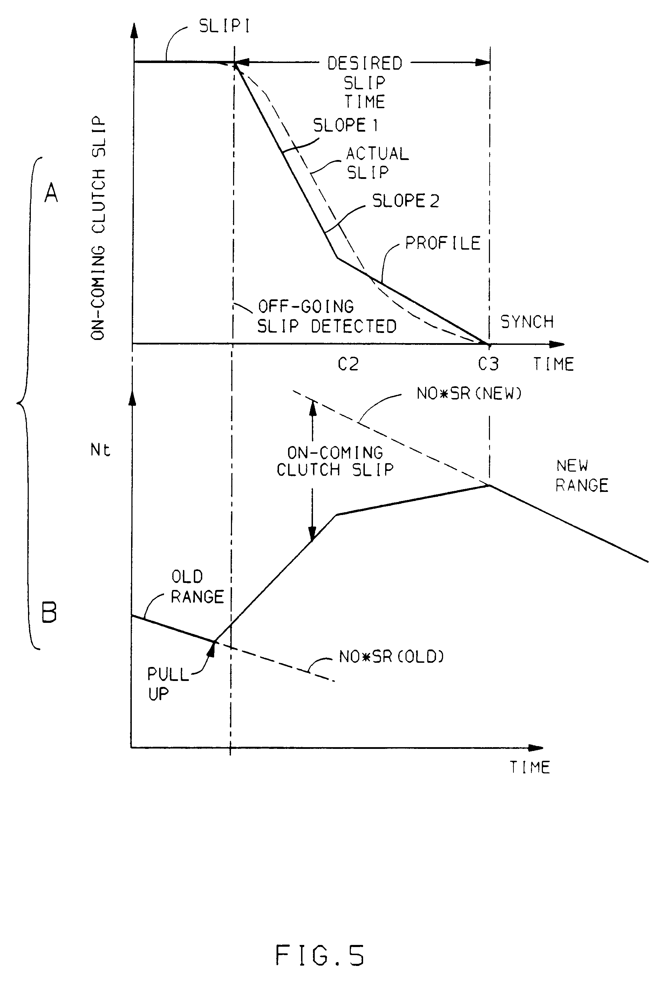

The closed-loop profile control is better explained with reference to Figure 5, graph A, which shows the on-coming clutch slip speed profile in solid lines and actual slip speed in dashed lines. Slip speed is determined by comparing the turbine speed to the output speed. Specifically, slip speed is the difference (times a conversion factor K3) between turbine speed and the product of the output speed and the speed ratio of the higher or new range, or algebraically,

SLIP = K3 *[Nt- (No * SR(new)].

Thus, as soon as a shift command is issued, there is slip in the on-coming clutch. The initial slip speed, SLIPI, is the slip value at the initiation of closed loop. The slip speed profile begins at that point and decreases at a fixed rate, called the first slope. Then at a determined point, the rate reduces to a second slope. The slopes are chosen so that, ideally, the actual slip speed can be made to go to zero smoothly within a given time period. The second slope is less steep than the first slope and reduces end of shift torque disturbance by more closely matching the acceleration rates on both sides of the on-coming clutch. By using slip speed as the control target, both turbine and output speeds are taken into account when controlling the shift duration.

To determine the slopes of the slip profile, three constants C1, C2 and C3 are defined. The constant C1 is a fraction of SLIPI at which the second slope begins; i.e., if SLIP = <C1*SLIPI, the slope changes to slope 2. The constant C2 is the desired time to utilize the first slope. The constant C3 is the desired overall closed-loop time. The constants C2 and C3 are used only for the slope calculation and not for direct timing purposes. The first and second slopes SLOPE1, SLOPE2 are defined as:

SLOPE1 = [SLIPI-(C1*SLIPI)]/C2; and
SLOPE2 = C1*SLIPI/(C3-C2).

The closed-loop profile control is carried out by correcting the on-coming clutch command pressure by a term which is proportional to slip speed error. The effect on turbine speed is shown in Figure 5, graph B, where pullup is detected when turbine speed increases a certain amount above the lower dashed line which represents the product of output speed (No) and speed ratio for the old range (SR OLD). Thereafter the turbine speed increases in accordance with the profile control where on-coming clutch slip speed is seen to be the difference between the turbine speed curve and the upper dashed line which represents the product of output speed (No) and speed ratio for the new range (SR NEW). The arrival at synchronization speed as determined by detecting sync a preset number of times in consecutive loops completes the closed-loop profile control. At that time maximum pressure is applied to the on-coming clutch.

The control has several advantages. The intermediate off-going pressure value Pint reduces clutch pressure undershoot caused by solenoid dynamics. The lower off-going pressure Pioff is sufficient to maintain the old range with the off-going clutch and allows transition to off-going clutch control in the event of a throttle increase before the off-going clutch is exhausted. By exhausting the off-going clutch before the end of fill time, it is assured that off-going clutch capacity is removed before application of the on-coming clutch and thereby eliminates clutch tie-up and associated shift quality degradation.

The off-going clutch slip is used to detect turbine pullup and thereby indicate that on-coming clutch capacity has been achieved. This automatically sets the time for actuation of the closed-loop control. The on-coming pressure command is ramped up following fill termination to achieve a timely turbine pullup when the initial on-coming command pressure is low. If the off-going clutch slip is detected during the fill period, the fill period is terminated early to reduce the overfill torque disturbance.

The closed-loop profile controls the on-coming clutch slip (rather than turbine speed) to ensure that changes in output speed (due to braking) are also taken into account when controlling shift duration. The reduced slope after a specified fraction of the initial on-coming clutch slip is achieved reduces the end of shift torque disturbance by more closely matching the acceleration rates on both sides of the on-coming clutch. Maintaining closed-loop control until synchronization has been detected in several consecutive control loops assures that true synchronization has been achieved and maintained before full clutch application is made. As will be seen in the flow diagrams to be described, closed-loop control is suspended and the on-coming clutch is fully applied when both turbine and output speeds are below a threshold value. This ensures timely shift completion at zero or near zero vehicle speed.

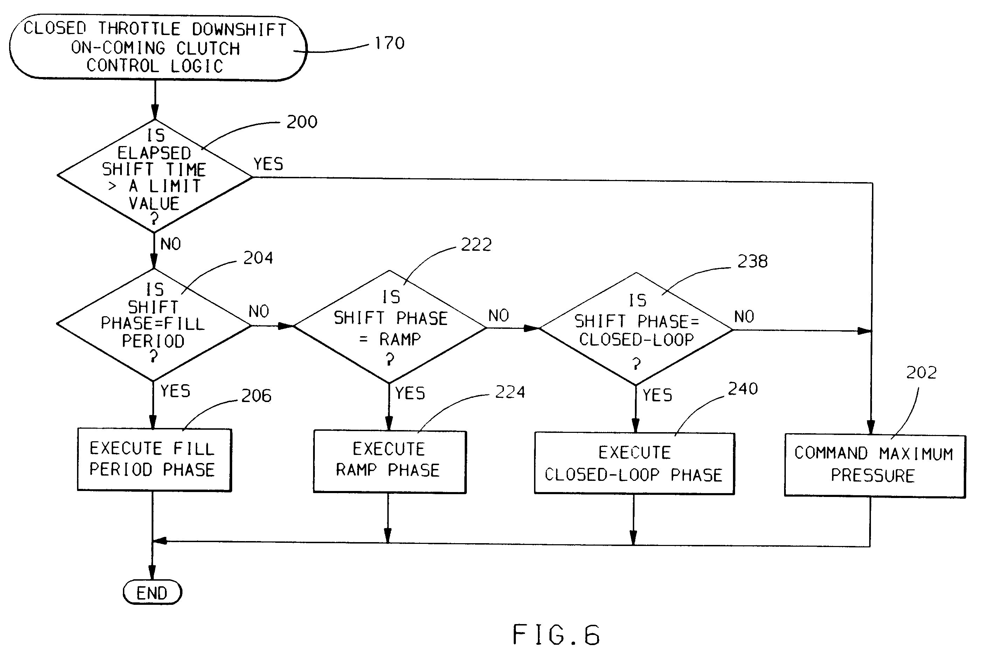

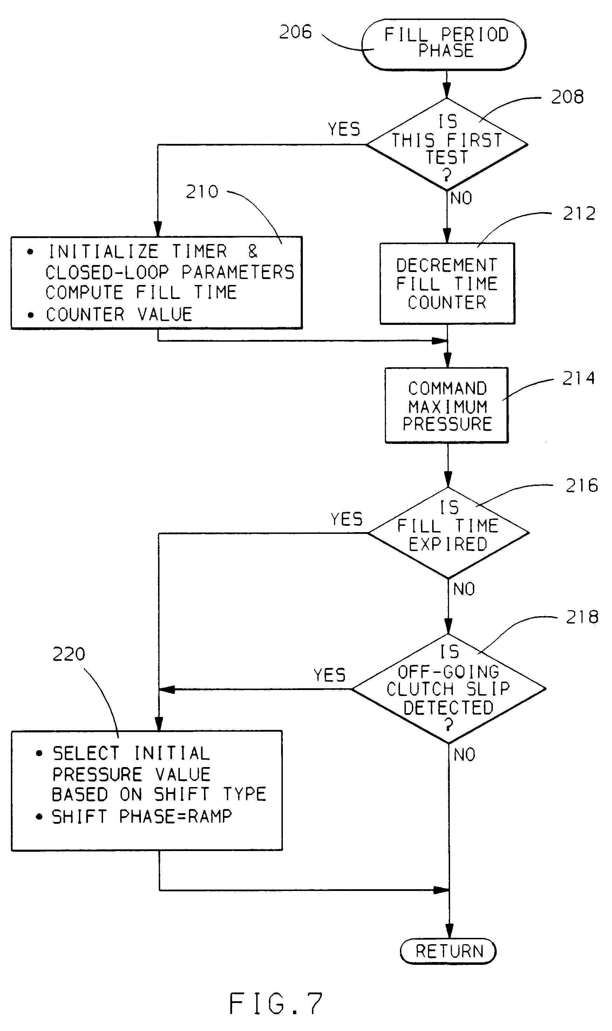

The on-coming clutch logic 170 is shown in Figures 6 to 9. In these diagrams, SHIFT PHASE is a pointer that indicates which shift operation is beginning or is underway. If elapsed time from the shift initiation is greater than a set limit value 200, maximum pressure is commanded 202. This forces a shift completion within a time limit. If the time has not elapsed and SHIFT PHASE equals FILL PERIOD 204, the Fill Period routine (Fig. 7) is run 206. In the first loop of the routine 208, timers and closed-loop parameters are initialized and the fill time counter value is computed 210. In subsequent loops, the fill time counter is decremented 212 and the maximum pressure is commanded 214. If the fill time counter reaches zero 216 or off-going clutch slip is detected 218, the initial on-coming clutch pressure value, $P_{icl}$, is selected based on the shift type and SHIFT PHASE is set equal to RAMP 220. Otherwise, the routine repeats until the fill time expires or slip is detected.

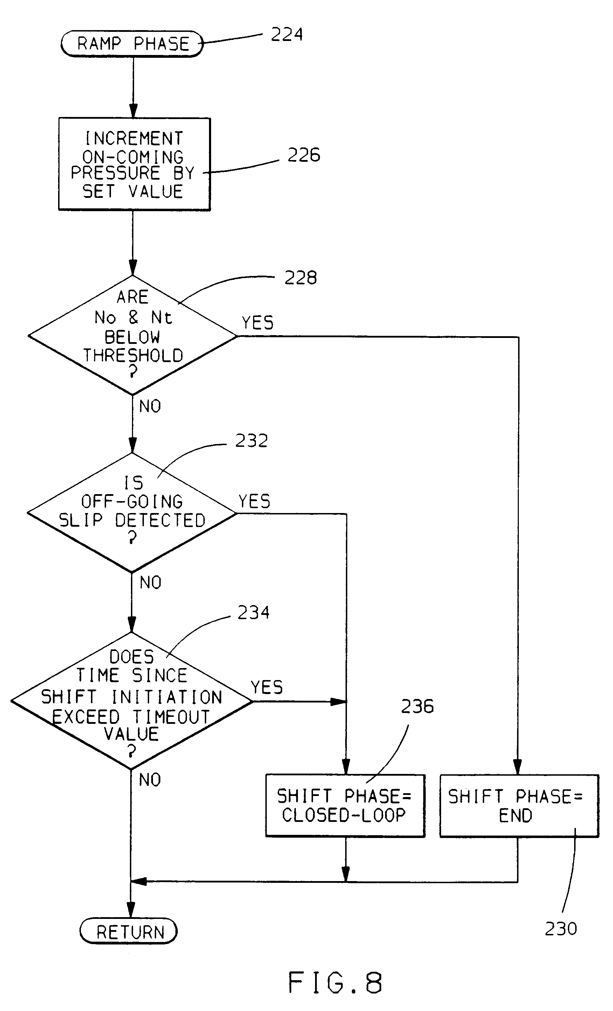

If SHIFT PHASE equals RAMP 222, the Ramp phase is executed 224. In the Ramp phase (Fig. 8) the on-coming pressure is incremented by a set value 226. If both transmission output speed, $N_o$, and turbine speed, $N_t$, are below a near zero threshold value 228, SHIFT PHASE is set to END 230. If the speeds are not below the threshold, and if either off-going slip is detected 232, or the time since shift initiation exceeds a timeout value 234, SHIFT PHASE is set equal to CLOSED-LOOP 236.

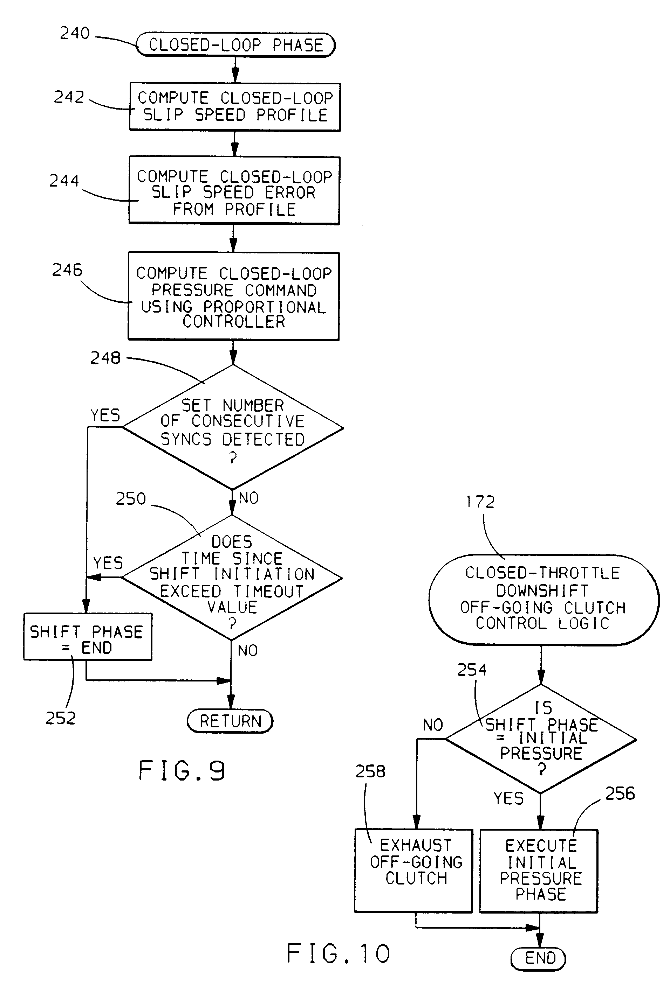

If SHIFT PHASE equals CLOSED-LOOP 238, the Closed-loop phase is executed 240. As shown in Figure 9, the closed-loop slip profile is calculated 242, the slip speed error is computed 244, and the closed-loop pressure command is computed by proportional control 246. Then, if a predefined number of consecutive on-coming clutch syncs are detected 248 or the time since shift initiation exceeds a timeout value 250, SHIFT PHASE is set to END 252 to effect maximum pressure and complete the shift.

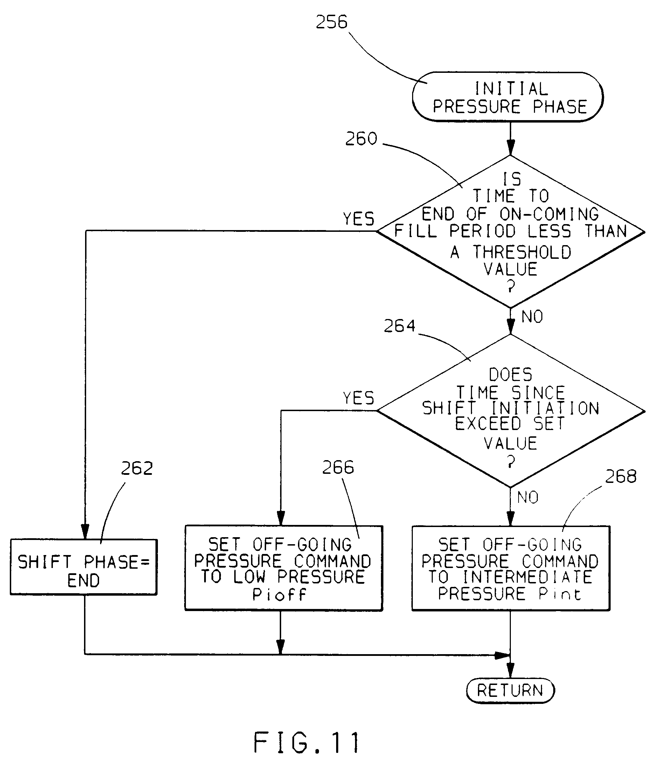

For the off-going clutch control logic 172 shown in Figures 10 and 11, if SHIFT PHASE equals INITIAL PRESSURE 254, the Initial Pressure phase is executed 256; otherwise the off-going clutch is exhausted 258. In the Initial Pressure phase 256, if the remaining time to the end of the fill period is less than a threshold value 260, SHIFT PHASE is set to END 262 to exhaust the clutch. Otherwise, if the time since shift initiation exceeds a set value 264, the off-going pressure command is set to the low pressure value, $P_{ioff}$, 266 and if it does not exceed the set value then the off-going pressure command is set to the intermediate pressure $P_{int}$ 268.

In the event that the throttle position increases after the closed throttle downshift program has been initiated, two special routines are provided to accommodate the fact that the shift is no longer a closed throttle shift. One routine is effected if the throttle increase is detected while the pressure command to the off-going clutch is still above zero; where a transition is made to a powered downshift program which controls the shift by adjusting the off-going clutch pressure command. Another routine is effected if the throttle increase is detected after the off-going clutch is exhausted; when the on-coming clutch pressure is controlled in ramp fashion to shift completion.

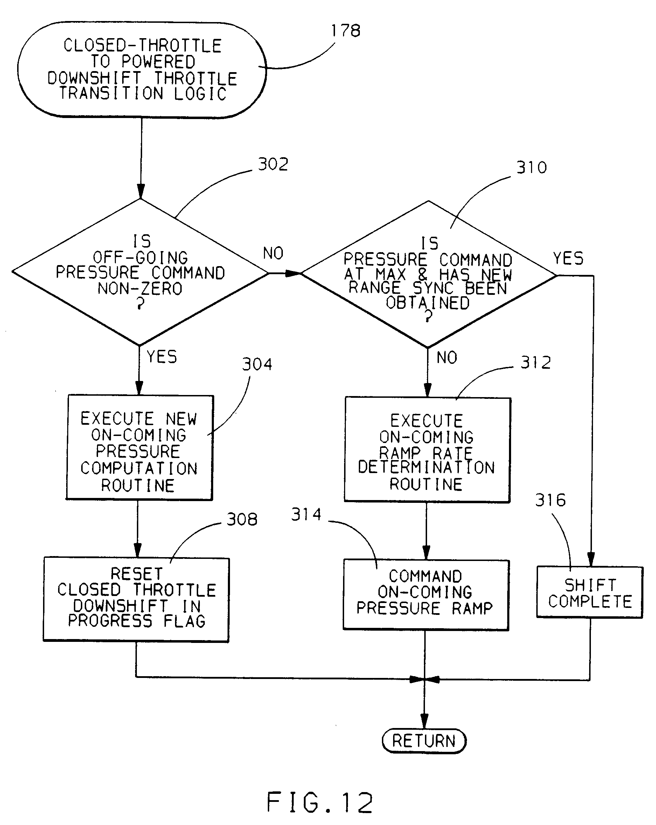

Figure 12 is the flow diagram for effecting a transition in response to detecting a throttle increase 178. If the off-going pressure command is not zero 302, a routine is executed to compute a new on-coming pressure 304. The CLOSED THROTTLE DOWNSHIFT IN PROGRESS flag is reset 308 to allow the transition to a powered downshift using the new on-coming pressure $P_{ion}$, which will occur on the next control loop, and the existing off-going clutch pressure. If the off-going pressure command is zero 302, a test is made for shift completion based on pressure command value and clutch sync 310. If the test is not satisfied, an on-coming ramp rate determination routine is executed 312 and on-coming ramp pressure is commanded 314 until the shift completion test is satisfied 310. When the test is satisfied the program goes to Shift Complete 316.

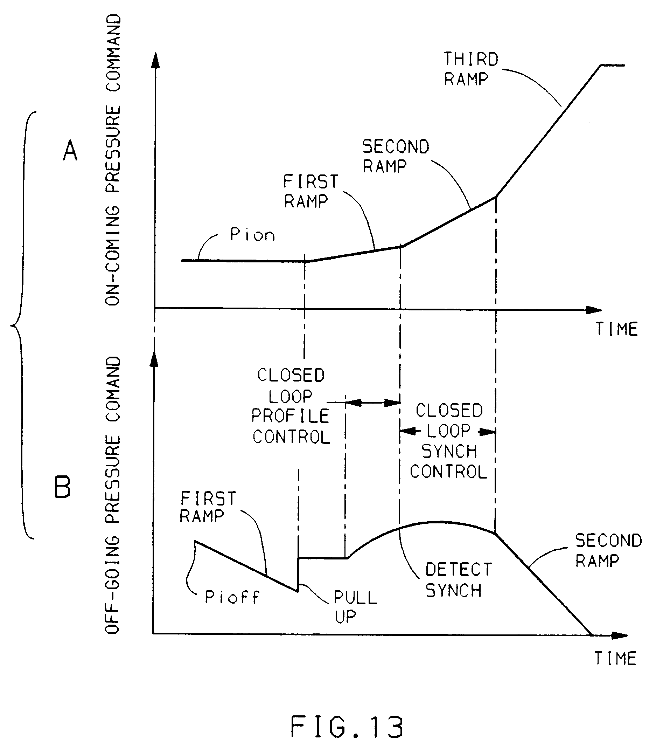

Figure 13, graphs A and B, show respectively the on-coming and off-going pressure commands for control of the on-coming and off-going clutches after transition to a powered downshift. Immediately following the transition, the off-going clutch pressure command is ramped downward at a programmed rate until turbine speed pullup occurs. During this same time interval, the initial on-coming pressure command, $P_{ion}$, is set at a low "fill" pressure level to prepare for the time when on-coming clutch must engage.

When the off-going clutch starts to slip, the coefficient of friction of the clutch changes from a static to a dynamic level. The friction reduction and its associated decrease in clutch torque capacity is compensated for by increasing the clutch pressure in a step fashion to a level at which the torque capacity of the clutch remains nearly constant. This pressure command level is maintained for a preset time or until one clutch sync or over sync is detected (whichever occurs first). If the preset time has elapsed before on-coming clutch synchronization, the off-going clutch pressure command is determined by a closed-loop control signal which attempts to maintain the slip of the on-coming clutch on a slip profile. This closed-loop slip profile control continues until one on-coming clutch sync or over sync has been detected. Beginning at the detected pullup and continuing through this interval of off-going profile closed-loop control, the on-coming clutch pressure is ramped upward at a first ramp rate.

Proportional control is carried out by correcting the off-going clutch command pressure by a term which is proportional to slip speed error. The arrival at synchronization speed, as determined by detecting sync one time, completes the closed-loop profile control. Ideally, the slip converges to zero but in some conditions, the turbine speed exceeds the target value resulting in turbine flare, and a closed-loop sync control is invoked to bring the slip speed to zero by an integral-plus-proportional control. Simultaneously, the ramp rate of the on-coming clutch pressure command is increased to a second ramp rate which is greater than the first. The closed-loop sync control continues until a preset number of additional syncs are detected. Then to complete the shift, the off-going pressure is ramped toward zero and the on-coming pressure is increased toward a maximum value at a third ramp rate which is greater than the second ramp rate.

To invoke the powered downshift program and make a smooth transition, a suitable value for the initial on-coming pressure command, Pion, must be determined. The determination is based on a set value Pion1 which is correct for the case where the throttle increase is detected at shift initiation, and another value, Pion2, which is correct for the case when the throttle increase is detected at the time of off-going clutch exhaust. The second value, Pion2, is the closed throttle downshift set pressure, Picl, less a set value K4. When the throttle increase is detected at an intermediate time, the program interpolates between Pion1 and Pion2 according to the proportion of remaining off-going clutch time before exhaust to the whole off-going clutch initial pressure phase.

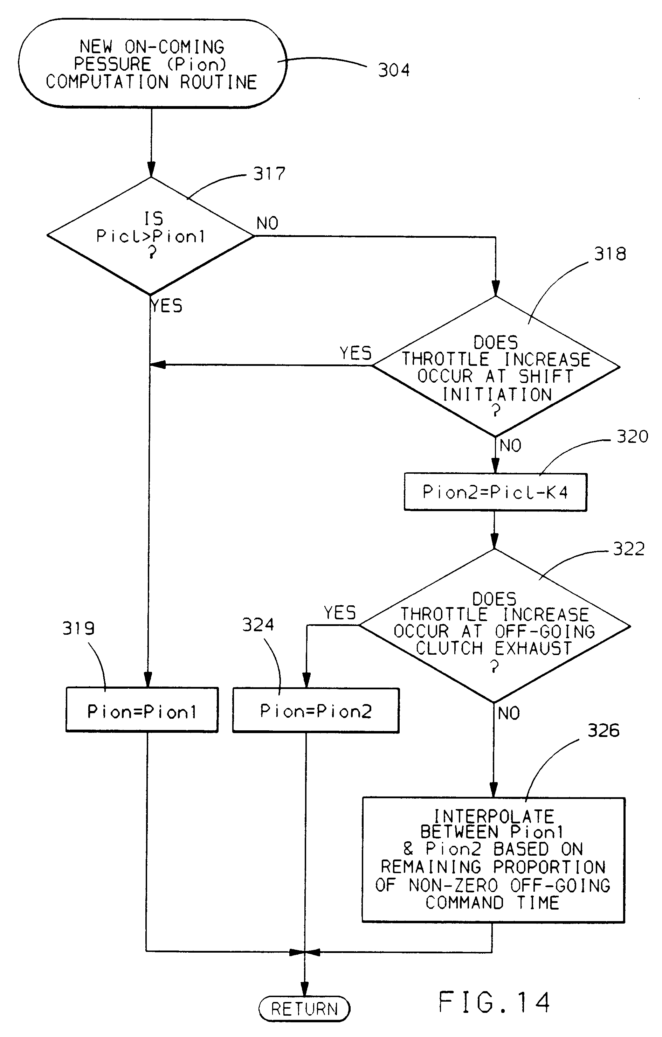

The flow diagram of Figure 14 shows the on-coming pressure computation routine 304. If Picl is greater than Pion1 317, or if the throttle increase occurs at shift initiation 318, Pion is set equal to the set value Pion1 319. Otherwise, the second pressure value is calculated as Pion2 = Picl - K4 320. If the throttle increase occurs at the time of off-going clutch exhaust 322, Pion is set to Pion2 324. If the throttle increase is detected at an intermediate time in the off-going clutch period, the interpolation step occurs 326 to find an intermediate value for Pion. Then the powered downshift transition routine proceeds.

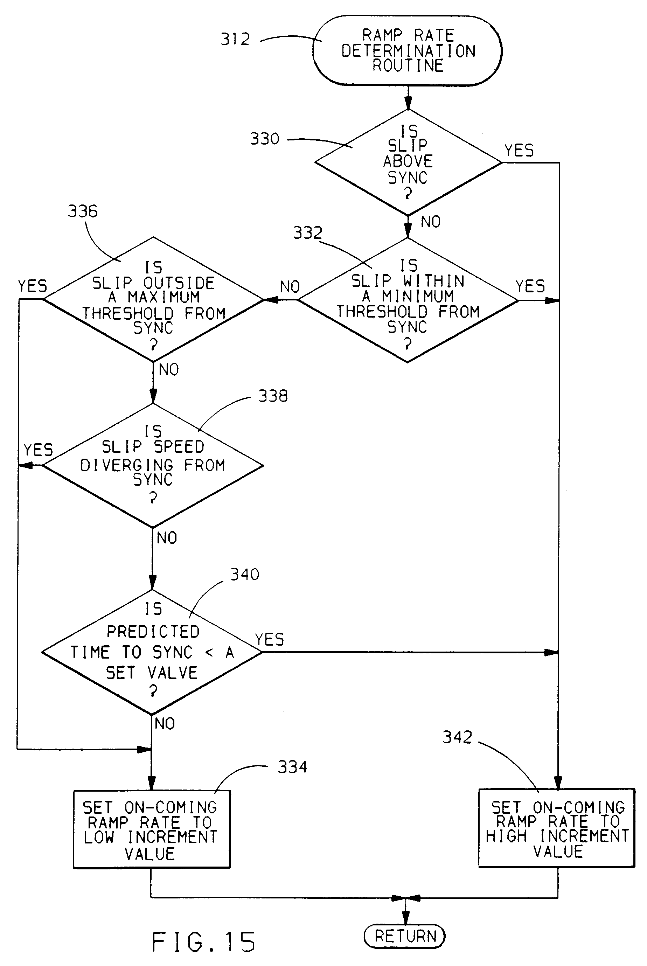

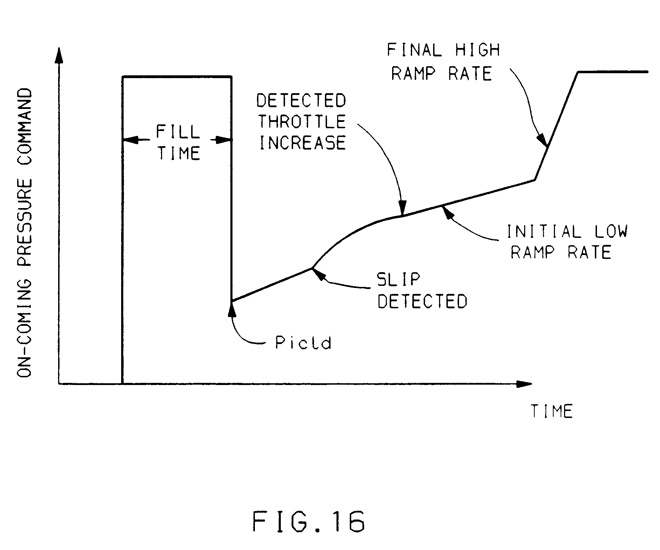

The flow diagram of Figure 15 illustrates the ramp rate determination routine 312 which is used when the off-going clutch pressure command is zero and it is desired to complete the engagement of the on-coming clutch by open-loop control. The diagram of Figure 16 complements Figure 15 by showing one example of on-coming pressure command under these conditions. The objective is to achieve synchronization and prevent turbine speed flare above synchronization while not requiring reactivation of the off-going clutch which has already been exhausted. This is accomplished by ramping up the on-coming pressure at an initial rate beginning at the detection of throttle increase until on-coming slip is close to or above sync and then increase the pressure at a final, higher rate to complete the shift. In the ramp rate determination routine 312, if slip is not above sync 330 and is not within a minimum threshold of sync 332, the ramp rate will be set to a low increment value 334 provided that either the slip is outside a maximum threshold from sync 336 or the slip speed is diverging from synchronization 338. If the slip is within the maximum threshold 336, the slip speed is converging on synchronization 338, and the predicted time to attain sync is not less than a set period, the low increment value will also be selected 334; however, a high increment value is selected 342 if the predicted time to attain sync is less than the set period 340. The high increment value is also selected when the slip is above sync 330 or slip is within the minimum threshold from sync 332.

Reference is made to co-pending applications EP-A-435 373, EP-A-436 977, EP-A-435 376, EP-A-435,377 and EP-A-436 978 filed the same day as this application.

## Claims

1. A method of controlling the change in an automatic transmission of a vehicle from an off-going fluid pressure operated torque transmitting device (C1-C5) associated with a lower speed ratio to an on-coming fluid pressure operated torque transmitting device (C1-C5) associated with a higher speed ratio when the engine throttle is substantially closed, wherein the off-going torque transmitting device is disengaged substantially concurrently with the engagement of the on-coming torque transmitting device, the transmission including an input (22), an output (24), a turbine (14) connected to the input to couple driving torque thereto, and turbine speed (Nt) and output speed (No) sensing means (60,62); the method comprising the steps of applying a fill pressure to the on-coming torque transmitting device for a fill time so as substantially to fill the on-coming torque transmitting device with operating fluid; detecting turbine speed pullup due to initial slip of the off-going torque transmitting device; and determining synchronization of the on-coming torque transmitting device on the basis of the turbine speed and the output speed, and completing the change when synchronization is detected; characterised by applying a low pressure to the off-going torque transmitting device for a time less than the fill time and then exhausting the off-going torque transmitting of operating fluid; initiating a closed-loop control period of the on-coming torque transmitting device when turbine speed pullup is detected; during the closed-loop control period, establishing a slip profile representative of desired slip during the closed-loop control period, measuring the slip of the on-coming torque transmitting device, and controlling the pressure of the on-coming torque transmitting device to control the slip of the on-coming torque transmitting device on the basis of the slip speed profile.

2. A method according to Claim 1, comprising the step of, after the fill time, applying to the on-coming torque transmitting device an initial on-coming pressure lower than the fill pressure, followed by a progressively increasing on-coming pressure.

3. A method according to claim 1 or 2, wherein the off-going torque transmitting device is exhausted of operating fluid a predetermined exhaust time before the end of the fill time.

4. A method according to Claim 1, 2 or 3, wherein synchronization of the on-coming torque transmitting device is detected on the basis of a comparison of the turbine speed and the product of the output speed and the lower speed ratio, wherein on detection of synchronization the on-coming pressure is increased to a maximum value.

5. A method according to any preceeding claim, including the steps of sensing the occurrence of opening of the throttle during the change, and on sensing opening of the throttle suspending the closed-loop control of the on-coming torque transmitting device and increasing the on-coming pressure by open-loop control until completion of the change.

6. A method according to Claim 5, wherein, when opening of the throttle is sensed after the step of exhausting the off-going torque transmitting device of operating fluid, the on-coming pressure is increased progressively during the open-loop control.

7. A method according to Claim 6, including the step of determining the rate of increase in on-coming pressure on the basis of slip of the on-coming torque transmitting device, wherein a relatively low rate of increase is set when slip is more than a predetermined amount and a relatively high rate of increase is set when slip indicates that the on-coming torque transmitting device is close to synchronization.

8. A method according to Claim 5, 6 or 7, wherein, when opening of the throttle is sensed before the step of exhausting the off-going torque transmitting device of operating fluid, the change under closed throttle conditions is suspended and an open throttle change is implemented.

9. A method according to Claim 8, wherein the step of implementing an open throttle change comprises the steps of calculating an initial on-coming pressure for the on-coming torque transmitting device based on preset values and the proportion of time remaining before the off-going torque transmitting device is to be exhausted of operating fluid, applying a progressively increasing on-coming pressure to the on-coming torque transmitting device starting at the calculated initial on-coming pressure, establishing a slip profile representative of desired slip during the change, and controlling the off-going pressure to cause slip of the on-coming torque transmitting device to follow substantially the slip profile, thereby to synchronize the on-coming torque transmitting device.

**Patentansprüche**

1. Ein Verfahren zur Steuerung des Wechsels in einem Automatikgetriebe eines Fahrzeugs von einer ab-gehenden fluiddruckbetriebenen Drehmomentübertragungsvorrichtung (C1-C5), die einem niedrigeren Geschwindigkeitsverhältnis zugeordnet ist, zu einer auf-kommenden fluiddruckbetriebenen Drehmomentübertragungsvorrichtung (C1-C5), die einem höheren Geschwindigkeitsverhältnis zugeordnet ist, wenn die Motordrossel im wesentlichen geschlossen ist, worin die ab-gehende Drehmomentübertragungsvorrichtung im wesentlichen gleichzeitig mit dem Eingriff der auf-kommenden Drehmomentübertragungsvorrichtung außer Eingriff gebracht wird, das Getriebe einen Eingang (22), einen Ausgang (24), eine Turbine (14), die mit dem Eingang verbunden ist, um Antriebsdrehmoment daran zu kuppeln, und Turbinengeschwindigkeits-(Nt)- und Ausgangsgeschwindigkeits-(No)-Wahrnehmungsmittel (60, 62) einschließt; wobei das Verfahren die Schritte umfaßt, daß ein Fülldruck an die auf-kommende Drehmomentübertragungsvorrichtung für eine Füllzeit angelegt wird, um im wesentlichen die auf-kommende Drehmomentübertragungsvorrichtung mit Betriebsfluid zu füllen; ein Turbinengeschwindigkeitshochziehen aufgrund eines anfänglichen Schlupfes der ab-gehenden Drehmomentübertragungsvorrichtung nachgewiesen wird; und eine Synchronisation der auf-kommenden Drehmomentübertragungsvorrichtungen auf der Grundlage der Turbinengeschwindigkeit und der Ausgangsgeschwindigkeit festgestellt und der Wechsel vollendet wird, wenn eine Synchronisation nachgewiesen wird; dadurch gekennzeichnet, daß

ein niedriger Druck an die ab-gehende Drehmomentübertragungsvorrichtung für eine Zeit geringer als die Füllzeit angelegt und dann die ab-gehende Drehmomentübertragung von Betriebsfluid entleert wird; eine Geschlossene-Schleife-Steuerungsperiode der auf-kommenden Drehmomentübertragungsvorrichtung initiiert wird, wenn ein Turbinengeschwindigkeitshochziehen nachgewiesen wird; während der Geschlossene-Schleife-Steuerungsperiode ein Schlupfprofil errichtet wird, welches einen erwünschten Schlupf während der Geschlossene-Schleife-Steuerungsperiode repräsentiert, der Schlupf der auf-kommenden Drehmomentübertragungsvorrichtung gemessen und der Druck der aufkommenden Drehmomentübertragungsvorrichtung gesteuert wird, um den Schlupf der auf-kommenden Drehmomentübertragungsvorrichtung auf der Grundlage des Schlupfgeschwindigkeitsprofils zu steuern.

2. Ein Verfahren nach Anspruch 1, welches den Schritt umfaßt, daß, nach der Füllzeit, an die auf-kommende Drehmomentübertragungsvorrichtung ein anfänglicher auf-kommender Druck niedriger als der Fülldruck angelegt wird, dem ein fortschreitend ansteigender auf-kommender Druck folgt.

3. Ein Verfahren nach Anspruch 1 oder 2, worin die ab-gehende Drehmomentübertragungsvorrichtung eine vorbestimmte Entleerzeit vor dem Ende der Füllzeit von Betriebsfluid entleert wird.

4. Ein Verfahren nach Anspruch 1, 2 oder 3, worin eine Synchronisation der auf-kommenden Drehmomentübertragungsvorrichtung auf der Grundlage eines Vergleichs der Turbinengeschwindigkeit und des Produkts aus der Ausgangsgeschwindigkeit und dem niedrigeren Geschwindigkeitsverhältnis festgestellt wird, worin auf einen Nachweis einer Synchronisation der auf-kommende Druck auf einen maximalen Wert erhöht wird.

5. Ein Verfahren nach einem der vorhergehenden Ansprüche, welches die Schritte einschließt, daß das Eintreten eines Öffnens der Drossel während des Wechsels wahrgenommen wird und auf ein Wahrnehmen eines Öffnens der Drossel die Geschlossene-Schleife-Steuerung der auf-kommenden Drehmomentübertragungsvorrichtung ausgesetzt und der auf-kommende Druck durch eine Offene-Schleife-Steuerung bis zu einer Vollendung des Wechsels erhöht wird.

6. Ein Verfahren nach Anspruch 5, worin, wenn ein Öffnen der Drossel nach dem Schritt des Entleerens der ab-gehenden Drehmomentübertragungsvorrichtung von Betriebsfluid wahrgenommen wird, der auf-kommende Druck fortschreitend erhöht wird während der Offene-Schleife-Steuerung.

7. Ein Verfahren nach Anspruch 6, welches den Schritt einschließt, daß die Rate eines Anstiegs im auf-kommenden Druck auf der Grundlage eines Schlupfes der auf-kommenden Drehmomentübertragungsvorrichtung bestimmt wird, worin eine relativ niedrige Anstiegsrate eingestellt wird, wenn der Schlupf mehr als einen vorbestimmten Betrag ausmacht, und eine relativ hohe Anstiegsrate eingestellt wird, wenn der Schlupf anzeigt, daß die auf-kommende Drehmomentübertragungsvorrichtung einer Synchronisation nahe ist.

8. Ein Verfahren nach Anspruch 5, 6 oder 7, worin, wenn ein Öffnen der Drossel vor dem Schritt des Entleerens der ab-gehenden Drehmomentübertragungsvorrichtung von Betriebsfluid wahrgenommen wird, der Wechsel unter Geschlossene-Drossel-Bedingungen ausgesetzt und ein Wechsel bei offener Drossel ausgeführt wird.

9. Ein Verfahren nach Anspruch 8, worin der Schritt des Ausführens eines Wechsels bei offener Drossel die Schritte umfaßt, daß ein anfänglicher auf-kommender Druck für die auf-kommende Drehmomentübertragungsvorrichtung berechnet wird, und zwar gestützt auf voreingestellte Werte und den Anteil von Zeit, die verbleibt, bevor die ab-gehende Drehmomentübertragungsvorrichtung von Betriebsfluid zu entleeren ist, ein fortschreitend ansteigender auf-kommender Druck an die auf-kommende Drehmomentübertragungsvorrichtung beginnend bei dem berechneten anfänglichen auf-kommenden Druck angelegt wird, ein Schlupfprofil errichtet wird, welches erwünschten Schlupf während des Wechsels repräsentiert, und der ab-gehende Druck gesteuert wird, um einen Schlupf der auf-kommenden Drehmomentübertragungsvorrichtung zu verursachen und somit im wesentlichen dem Schlupfprofil zu folgen, um dadurch die auf-kommende Drehmomentübertragungsvorrichtung zu synchronisieren.

**Revendications**

1. Procédé de commande de changement de vitesse dans une boîte de vitesse automatique de véhicule entre un dispositif de transmission de couple de départ actionné par pression de fluide (C1 à C5) associé à un rapport de vitesse inférieur et un dispositif de transmission de couple (C1 à C5) d'arrivée actionné par pression de fluide associé à un rapport de vitesse supérieur lorsque le papillon des gaz du moteur est sensiblement fermé, dans lequel le dispositif de transmission de couple de départ est désenclenché sensiblement en même temps que le dispositif transmetteur de couple d'arrivée est enclenché, la transmission comprenant une entrée (22), une sortie (24), une turbine (14) reliée à l'entrée pour y coupler un couple d'entraînement et des moyens de détection (60, 62) de la vitesse de la turbine (Nt) et de la vitesse de sortie (No), le procédé comprend les étapes consistant à appliquer une pression de remplissage au dispositif transmetteur de couple d'arrivée pendant un temps de remplissage de manière à remplir sensiblement le dispositif de transmission de couple d'arrivée de fluide d'actionnement, à détecter la traction vers le haut de la vitesse de la turbine due à un patinement initial du dispositif de transmission de couple de départ, et à déterminer la synchronisation du dispositif de transmission de couple d'arrivée sur la base de la vitesse de la turbine et de la vitesse de sortie, et à compléter le changement lorsque la synchronisation est détectée, caractérisé en ce que l'on applique une pression basse au dispositif de transmission de couple de départ pendant un temps inférieur au temps de remplissage et on évacue le fluide d'actionnement du dispositif de transmission de couple de départ, on amorce une période de commande en boucle fermée du dispositif de transmission de couple d'arrivée lorsque la traction vers le haut de la vitesse de la turbine est détectée, au cours de la période de commande en boucle fermée, on établit un profil de patinement représentatif du patinement souhaité au cours de la période de commande en boucle fermée, on mesure le patinement du dispositif de transmission de couple d'arrivée et on commande la pression du dispositif de transmission de couple d'arrivée pour commander le patinement du dispositif de transmission de couple d'arrivée sur base du profil de vitesse de patinement.

2. Procédé selon la revendication 1, consistant, après le temps de remplissage, à appliquer au dispositif transmetteur de couple d'arrivée une pression entrante initiale inférieure à la pression de remplissage suivie d'une augmentation progressive de la pression d'arrivée.

3. Procédé selon la revendication 1 ou 2, dans lequel le dispositif transmetteur de couple de départ est évacué du fluide d'actionnement un temps d'évacuation prédéterminé avant la fin du temps de remplissage.

4. Procédé selon la revendication 1, 2 ou 3 dans lequel la synchronisation du dispositif transmetteur de couple d'arrivée est détectée sur base d'une comparaison de la vitesse de la turbine et du produit de la vitesse de sortie et du rapport de vitesse inférieur, dans lequel la pression d'arrivée est augmentée à une valeur maximum lors de la détection de la synchronisation.

5. Procédé selon l'une quelconque des revendications précédentes, comprenant les étapes consistant à détecter l'apparition de l'ouverture du papillon des gaz au cours du changement et, lors de la détection de l'ouverture du papillon des gaz, à suspendre la commande en boucle fermée du dispositif transmetteur de couple entrant et à augmenter la pression d'arrivée par commande en boucle fermée jusqu'à l'achèvement du changement.

6. Procédé selon la revendication 5, dans lequel, lorsque l'ouverture du papillon des gaz est détectée après le stade d'évacuation du fluide d'actionnement du dispositif transmetteur de couple de départ, la pression d'arrivée est augmentée progressivement au cours de la commande de boucle fermée.

7. Procédé selon la revendication 6, consistant à déterminer le taux d'augmentation de la pression d'arrivée et sur la base du patinement du dispositif transmetteur de couple d'arrivée, dans lequel un taux d'augmentation relativement bas est réglé lorsque le patinement est supérieur à une quantité prédéterminée et un taux d'augmentation relativement élevé est réglé lorsque le patinement indique que le dispositif transmetteur de couple d'arrivée est proche de la synchronisation.

8. Procédé selon la revendication 5, 6 ou 7, dans lequel, lorsque l'ouverture du papillon des gaz est détectée avant le stade d'évacuation du fluide d'actionnement du dispositif transmetteur de couple de départ, le changement dans des conditions où le papillon des gaz est fermé est suspendu et un changement avec un papillon de gaz ouvert est mis en oeuvre.

9. Procédé selon la revendication 8, dans lequel le stade de mise en oeuvre d'un changement avec un papillon des gaz ouvert comprend les étapes qui consiste à calculer une pression d'arrivée initiale pour le dispositif transmetteur de couple d'arrivée sur la base de valeurs préréglées et de la proportion de temps restant avant que le dispositif transmetteur de couple de départ ne soit libéré du fluide d'actionnement, à appliquer une pression d'arrivée augmentant progressivement au dispositif transmetteur de couple d'arrivée en commençant par la pression d'arrivée initiale calculée, à établir un profil de patinement représentatif du patinement souhaité au cours du changement, et à commander la pression de départ pour provoquer le patinement du dispositif transmetteur de couple d'arrivée afin qu'il suive sensiblement le profil de patinement, de manière à synchroniser le dispositif transmetteur de couple d'arrivée.

FIG. 1a

| RANGE | CLUTCHES APPLIED | | | | |
|---|---|---|---|---|---|
|  | C1 | C2 | C3 | C4 | C5 |
| FWD 1 | X |  |  |  | X |
| 2 | X |  |  | X |  |
| 3 | X |  | X |  |  |
| 4 | X | X |  |  |  |
| 5 |  | X | X |  |  |
| 6 |  | X |  | X |  |
| REV 1 |  |  | X |  | X |

FIG.1b

FIG.2

FIG. 3a

SOLENOID
CONTROL LOGIC  140

LOCKUP
SHIFT IN
PROGRESS
?  144

LOCKUP CLUTCH
CONTROL  142

YES

NO

RANGE
SHIFT IN
PROGRESS
?  146

NO

YES

AT
CLOSED-
THROTTLE
?  168

UPSHIFT
?  150

YES

UPSHIFT
ON-COMING
CLUTCH
CONTROL  164

NO

YES

SET
CLOSED-THROTTLE
DOWNSHIFT IN
PROGRESS FLAG  169

IS
CLOSED-
THROTTLE
DOWNSHIFT
IN PROGRESS
FLAG SET
?  173

DOWNSHIFT
?  152

YES

UPSHIFT
OFF-GOING
CLUTCH
CONTROL  166

YES

NO

NO

NO

A     B     C     D     E     F

EP 0 435 372 B1

EP 0 435 372 B1

Ⓐ     Ⓑ          Ⓒ               Ⓓ               Ⓔ                          Ⓕ

170 — CLOSED-THROTTLE
DOWNSHIFT
ON-COMING
CLUTCH CONTROL

174 — POWERED
DOWNSHIFT
ON-COMING
CLUTCH
CONTROL

154 — NEUTRAL
SHIFT
?

172 — CLOSED THROTTLE
DOWNSHIFT
OFF-GOING
CLUTCH CONTROL

178 — CLOSED THROTTLE
TO POWERED
DOWNSHIFT
TRANSITION
LOGIC

176 — POWERED
DOWNSHIFT
OFF-GOING
CLUTCH
CONTROL

156 — GARAGE SHIFT
CLUTCH
CONTROL

155 — NEUTRAL SHIFT
CLUTCH
CONTROL

YES

NO

160 — END OF
SHIFT
?

YES

CHANGE
ADAPTIVE
SHIFT
PARAMETERS

— 162

NO

163 — OUTPUT DUTY
CYCLE COMMAND

RETURN

FIG. 3b

FIG. 4

FIG.5

FIG.6

EP 0 435 372 B1

206 ─── ( FILL PERIOD PHASE )

208 ─── IS THIS FIRST TEST ?

YES →

210 ─── • INITIALIZE TIMER & CLOSED-LOOP PARAMETERS COMPUTE FILL TIME
• COUNTER VALUE

NO ↓

212 ─── DECREMENT FILL TIME COUNTER

214 ─── COMMAND MAXIMUM PRESSURE

216 ─── IS FILL TIME EXPIRED

YES →

NO ↓

218 ─── IS OFF-GOING CLUTCH SLIP DETECTED ?

YES →

220 ─── • SELECT INITIAL PRESSURE VALUE BASED ON SHIFT TYPE
• SHIFT PHASE=RAMP

NO ↓

( RETURN )

FIG.7

FIG.8

FIG.9

FIG.10

21

256

INITIAL
PRESSURE PHASE

260

IS
TIME TO
END OF ON-COMING
FILL PERIOD LESS THAN
A THRESHOLD
VALUE
?

YES

NO

264

DOES
TIME SINCE
SHIFT INITIATION
EXCEED SET
VALUE
?

YES

NO

262

SHIFT PHASE=
END

266

SET OFF-GOING
PRESSURE COMMAND
TO LOW PRESSURE
Pioff

268

SET OFF-GOING
PRESSURE COMMAND
TO INTERMEDIATE
PRESSURE Pint

RETURN

FIG.11

22

CLOSED-THROTTLE
TO POWERED
DOWNSHIFT THROTTLE
TRANSITION LOGIC

178

302

IS
OFF-GOING
PRESSURE COMMAND
NON-ZERO
?

NO

310

IS
PRESSURE COMMAND
AT MAX & HAS NEW
RANGE SYNC BEEN
OBTAINED
?

YES

YES

NO

304

EXECUTE NEW
ON-COMING
PRESSURE
COMPUTATION
ROUTINE

312

EXECUTE
ON-COMING
RAMP RATE
DETERMINATION
ROUTINE

316

308

RESET
CLOSED THROTTLE
DOWNSHIFT IN
PROGRESS FLAG

314

COMMAND
ON-COMING
PRESSURE RAMP

SHIFT
COMPLETE

RETURN

FIG.12

23

FIG.13

NEW ON-COMING
PESSURE (Pion)
COMPUTATION ROUTINE — 304

IS
Picl>Pion1
? — 317

NO

YES

DOES
THROTTLE INCREASE
OCCUR AT SHIFT
INITIATION
? — 318

YES

NO

Pion2=Picl-K4 — 320

DOES
THROTTLE INCREASE
OCCUR AT OFF-GOING
CLUTCH EXHAUST
? — 322

YES

NO

319

Pion=Pion1

324

Pion=Pion2

326

INTERPOLATE
BETWEEN Pion1
& Pion2 BASED ON
REMAINING PROPORTION
OF NON-ZERO OFF-GOING
COMMAND TIME

RETURN

FIG.14

25

FIG.15

FIG.16